(19) Europäisches Patentamt
European Patent Office
Office européen des brevets

(11) Numéro de publication : **0 119 109 B2**

(12) **NOUVEAU FASCICULE DE BREVET EUROPEEN**

(45) Date de publication du nouveau fascicule du brevet : **19.06.91 Bulletin 91/25**

(51) Int. Cl.[5] : **C08F 2/28**

(21) Numéro de dépôt : **84400118.0**

(22) Date de dépôt : **20.01.84**

(54) **Dispersions aqueuses cationiques de polymères synthétiques.**

(30) Priorité : **28.01.83 FR 8301301**

(43) Date de publication de la demande : **19.09.84 Bulletin 84/38**

(45) Mention de la délivrance du brevet : **01.07.87 Bulletin 87/27**

(45) Mention de la décision concernant l'opposition : **19.06.91 Bulletin 91/25**

(84) Etats contractants désignés : **AT BE CH DE FR GB IT LI LU NL SE**

(56) Documents cités :
**FR-A- 2 151 573**
**US-A- 3 399 159**
**US-A- 3 637 565**
**US-A- 3 808 158**

(73) Titulaire : **RHONE-POULENC CHIMIE**
**25, quai Paul Doumer**
**F-92408 Courbevoie Cédex (FR)**

(72) Inventeur : **Leising, Frédéric**
**38, rue de Coubron**
**F-93410 Vaujours (FR)**

(74) Mandataire : **Fabre, Madeleine-France et al**
**RHONE-POULENC INTERSERVICES Service Brevets Chimie 25, quai Paul Doumer**
**F-92408 Courbevoie Cédex (FR)**

**EP 0 119 109 B2**

Jouve, 18, rue Saint-Denis, 75001 PARIS

## Description

La présente invention a pour objet des dispersions aqueuses cationiques de polymères synthétiques obtenues par polymérisation en émulsion.

Il est connu d'après le brevet américain n° 3.399.159 de préparer des latex cationiques par polymérisation en milieu très acide (pH de l'ordre de 1 à 3,5) d'un monomère azoté (du type vinylpyridine, terbutylaminoéthylméthacrylate) et d'un acrylate d'alkyle en l'absence d'émulsifiant.

De même le brevet américain n° 3.253.941 décrit des latex cationiques obtenus par polymérisation en milieu acide d'un monomère aminoalkylé (tel que les acrylates ou méthacrylates d'alkylaminoalkyle), d'un monomère du type styrène, vinyltoluène, acrylonitrile, méthylméthacrylate et d'un ester acrylique en $C_1$-$C_8$.

Les latex ainsi obtenus ne peuvent être utilisés en milieu basique car leur densité de charges cationiques à pH basique est très faible.

Il a été constaté qu'au cours de l'opération de polymérisation ou des opérations de traitement des dispersions aqueuses, il se forme un pourcentage appréciable de grains parasites qui sont dûs à un manque de stabilité des particules ce polymère. Ce phénomène engendre une augmentation des coûts de production (perte de rendement à la filtration) et une baisse de la qualité des dispersions.

Le but de la Demanderesse a été de préparer des latex cationiques utilisables quelque soit le pH et présentant un taux de grains parasites inférieur à 500 parties par million (soit 0,05% en poids par rapport au polymère).

Les dispersions aqueuses cationiques de polymères synthétiques faisant l'objet de l'invention sont caractérisées en ce qu'elles sont obtenues en mettant en présence au moins un composé azoté tertiaire insaturé non-hydrolysable en milieu acide ou alcalin avec le milieu réactionnel (A) d'une opération de polymérisation en émulsion aqueuse d'au moins un monomère non ionogène copolymérisable avec ledit composé azoté tertiaire insaturé non-hydrolysable, ledit milieu réactionnel (A) contenant des charges essentiellement cationiques apportées par au moins une substance génératrice de charges cationiques liables chimiquement auxdits polymères synthétiques constituée par un sel insaturé copolymérisable d'onium polycoordonné d'un élément des groupes VB et VIB.

On entend par "composé azoté tertiaire insaturé non-hydrolysable en milieu acide ou alcalin, tout composé azoté insaturé exempt de groupe ammonium quaternaire, présentant un atome d'azote trisubstitué par des groupes hydrocarbonés et un taux d'hydrolyse n'excédant pas 5% en milieu acide ou alcalin à la température de polymérisation.

Ledit composé azoté tertiaire insaturé non-hydrolysable peut être mis en présence du milieu réactionnel (A) à un stade quelconque de l'opération de polymérisation du ou des monomères non ionogènes copolymérisables avec le composé azoté tertiaire insaturé non-hydrolysable. Ainsi il peut être totalement présent dans le milieu réactionnel (A) dès le départ de l'opération de polymérisation ; il peut être également introduit en continu ou en discontinu tout au long de l'opération de polymérisation ; il peut aussi n'être introduit dans le milieu réactionnel (A) qu'après un certain taux de transformation du monomère non ionogène (à partir de 30% de taux de transformation, par exemple) ou bien en fin de polymérisation (par exemple entre 90% et 98% du taux de conversion du monomère non ionogène).

Selon l'invention les composés azotés tertiaires insaturés non-hydrolysables répondant à la définition donnée ci-dessus, sont représentés par :

1) Les N(ω-dialkylaminoalkyl)amides d'acides carboxyliques insaturés de formule :

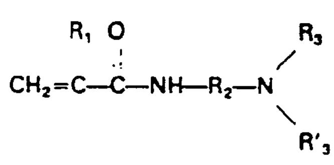

où :

$R_1$ représente un atome d'hydrogène ou un groupe alkyle en $C_1$-$C_4$, et de préférence en $C_1$-$C_2$

$R_2$ représente un groupe alkylène en $C_1$-$C_{12}$, et de préférence $C_1$-$C_8$

$R_3$ et $R'_3$ représentent des groupes alkyles en $C_1$-$C_6$, et de préférence en $C_1$-$C_4$, phényles éventuellement substitués par un radical alkyle en $C_1$-$C_9$

Répondent à cette formule le diméthylaminométhyl-acrylamide ou -méthacrylamide, le diméthylaminoéthyl-acrylamide ou -méthacrylamide

2) Les aminoesters insaturés de formule :

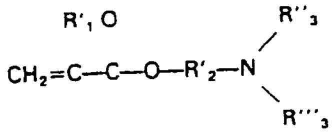

où :

$R'_1$ représente un groupe alkyle en $C_1$-$C_5$ et de préférence en $C_1$-$C_2$,

$R'_2$ représente un groupe alkylène linéaire ou ramifié contenant au moins 2 atomes de carbone et de préférence en $C_2$-$C_{12}$, en particulier en $C_2$-$C_8$

$R''_3$ et $R'''_3$ sont identiques ou différents et représentent un groupe alkyle en $C_1$-$C_6$, et de préférence en $C_1$-$C_4$, éventuellement substitué par un radical hydroxy, un groupe phényle éventuellement substitué par un radical alkyle en $C_1$-$C_9$

le nombre total d'atomes de carbone contenus dans les radicaux $R'_2$, $R''_3$ et $R'''_3$ devant être supérieur à 8 et de préférence supérieur ou égal à 10.

Répondent à cette formule le diterbutylaminoéthylméthacrylate, le diterbutylaminopropylméthacrylate, le dipentylaminoéthylméthacrylate.

3) Des composés azotés hétérocycliques renfermant un atome d'azote ou de carbone substitué par un groupe vinyle, tels que :

- la 2-vinylpyridine
- la 4-vinylpyridine
- la 1-éthyl 2-vinylpyridine
- la 1-benzyl 4-vinylpyridine
- la 1,2-diméthyl 5-vinylpyridine
- la 1-méthyl 2-vinylquinoléine
- la N-vinyl N'-méthylimidazole
- la 1-vinyl 3-méthylbenzimidazole

Parmi les monomères non ionogènes copolymérisables avec les composés azotés tertiaires insaturés non-hydrolysables, on peut citer :

les composés vinylaromatiques tels que le styrène, 1'α-méthylstyrène, le vinyltoluène, le monochlorostyrène.

les esters vinyliques tels que l'acétate de vinyle, le propionate de vinyle, le versatate de vinyle, le butyrate de vinyle

les nitriles éthyléniques tels que l'acrylonitrile, le méthacrylonitrile

les esters carboxyliques éthyléniques tels que le méthyl-, éthyl-, propyl-, isopropyl-, butyl, 2-éthylhexyl-, hydroxyéthyl-, hydroxypropyl- ou glycidyl-acrylate, le méthyl-, éthyl-, propyl-, butyl, hydroxyéthyl-, hydroxypropyl- ou glycidyl-méthacrylate, etc.

les dialkylesters de diacides carboxyliques éthyléniques, tels que les dialkylesters de l'acide fumarique, maléique, itaconique.

les amides éthyléniques et leurs dérivés N-substitués tels que l'acrylamide, le méthylacrylamide, le N-méthylol-, N-mèthoxyméthyl-acrylamide ou- méthacrylamide.

Lesdits monomères non-ionogènes peuvent être utilisés seuls ou bien en mélange entre eux lorsqu'ils sont copolymérisables entre eux.

Les substances génératrices de charges cationiques pouvant être mises en oeuvre sont des produits non hydrolysables ou partiellement hydrolysables c'est-à-dire des produits dont le taux d'hydrolyse dans les conditions réactionnelles de polymérisation est inférieur ou égal à 50% environ.

Parmi celles-ci on peut citer :

1) Les amorceurs de polymérisation générateurs de radicaux présentant une extrémité cationique tels que le chlorhydrate de 2,2' azobis(2-amidinopropane), le chlorhydrate d'azobis-N,N' diméthylèneisobutyramidine.

2) Les sels insaturés copolymérisables d'onium polycoordiné d'un élément des groupes VB et VIB de la classification péiodique tel que l'azote, le phosphore, le soufre, la présence de ces derniers sels étant nécessaire.

On entend par "sels insaturés d'onium polycoordiné d'un élément des groupes VB et VIB" tout sel présentant un cation onium dans lequel toutes les valences de l'élément des groupes VB et VIB sont satisfaites par des groupements hydrocarbonés, éléments dont la valence libre est saturé par un atome de carbone, au moins un desdits groupements hydrocarbonés étant insaturé.

A titre d'exemple on peut citer les sels insaturés d'ammonium quaternaire présentant la formule suivante:

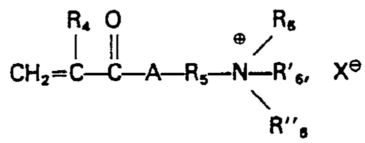

où

$X^-$ est choisi parmi les anions suivants : $Cl^-$, $Br^-$, $I^-$, $SO_4H^-$, $SO_4^-$, $CH_3SO_4^-$, $C_2H_5SO_4^-$, $CH_3COO^-$,

$R_4$ représente un atome d'hydrogène ou un groupe méthyle

A représente un atome d'oxygène ou un groupe –NH–

$R_5$ représente un groupe alkylène linéaire ou ramifié contenant de 1 à 18 atomes de carbone, de préférence de 1 à 10 atomes de carbone

$R_6$, $R'_6$, $R''_6$ sont semblables ou différents et représentent un groupe alkyle contenant de 1 à 4 atomes de carbone éventuellement substitué par un radical hydroxy, un groupe phényle éventuellement substitué par un radical alkyle contenant de 1 à 9 atomes de carbone.

le nombre total d'atomes de carbone présent dans les groupes $R_5$, $R_6$, $R'_6$ et $R''_6$ est supérieur à 4 quand A représente de l'oxygène.

Des produits répondant à cette formule sont le chlorure de triméthylaminoéthylacrylamide, le bromure de triméthylaminopropylacrylamide ou méthacrylamide, le méthylsulfate de triméthylaminobutylacrylamide ou méthacrylamide, le chlorure de triméthylaminopropylméthacrylate.

Parmi les sels d'onium insaturés on peut également citer :

– les sels insaturés de pyridinium, quinolinium, imidazolium, benzimidazolium...tels que :

le bromure de 1-méthyl 2-vinylpyridinium,
le chlorure de 1-éthyl 2-vinylpyridinium
le méthylsulfate de 1-éthyl 2-vinylpyridinium
le chlorure de 1-benzyl 4-vinylpyridinium
l'iodure de 1-méthyl 2-vinylquinolinium
le bromure de N-vinyl N'-méthylimidazolium
le bromure de 1-vinyl 3-méthylbenzimidazolium

– le chlorure de (2-méthacryloxydiméthylsulfonium)
– le méthylsulfate de méthyldiallylsulfonium
– le bromure de triméthylvinylphosphonium

La mise en oeuvre de la substance génératrice de charges cationiques dans le milieu réactionnel (A) peut être préalable à celle du composé azoté tertiaire insaturé non-hydrolysable ou concomittante de celle dudit composé azoté insaturé.

Ladite substance génératrice de charges cationiques peut également être présente dans le milieu réactionnel (A) au départ de l'opération de polymérisation par l'intermédiaire d'une "semence cationique" c'est-à-dire d'un polymère du copolymère préalablement préparé par polymérisation en émulsion aqueuse en milieu cationique du ou des monomères non-ionogènes en présence de la quantité désirée de substance génératrice de charges cationiques.

Pour une bonne réalisation du procédé permettant de préparer les dispersions cationiques de polymères synthétiques faisant l'objet de l'invention, on met en oeuvre pour 100 parties en poids de monomère(s) non ionogènes :

de 1 à 20 parties en poids de substance génératrice de charges cationiques, et de préférence de 2 à 10 parties en poids de ladite substance

au moins 4 parties en poids au total de substance génératrice de charges cationiques et de composé azoté insaturé, et de préférence de 4 à 15 parties en poids.

L'opération de copolymérisation du composé azoté insaturé et du ou des monomères ionogènes est réalisée dans les conditions classiques de polymérisation en émulsion aqueuse en milieu cationique à une température comprise entre 60 et 90°C et généralement entre 75 et 85°C, à un pH quelconque (pouvant varier de 3 à 12 et de préférence de 5 à 9) en présence d'un amorceur cationique ou non-ionique, éventuellement d'un agent émulsifiant cationique ou non-ionique et en outre en présence de la substance génératrice de charges cationiques, ladite substance étant constituée d'un sel insaturé copolymérisable d'onium polycoordiné d'un élément du groupe VB ou VIB et/ou d'un excès d'amorceur cationique.

Les amorceurs cationiques pouvant être mis en oeuvre sont ceux déjà cités ci-dessus comme exemple de substance génératrice de charges cationiques.

Comme exemples d'amorceurs non-ioniques on peut citer :

les peroxydes et hydroperoxydes minéraux ou organiques hydrosolubles ou organosolubles générateurs de radicaux libres non chargés tels que le peroxyde d'hydrogène, le peroxide de benzoyle, l'hydroperoxyde de tert-butyle, l'hydroperoxyde de cumène, le tert-butylperbenodate, le peroxyde de diisopropylbenzène, le peroxyde de méthyléthylcétone ;

les systèmes redox obtenus en associant auxdits peroxydes ou hydroperoxydes un réducteur tel que l'acide ascorbique, les sucres, les sels métalliques polyvalents, les sulfites, hydrosulfites, sulfoxalates, thiosulfates, bisulfites de sodium, calcium...le formaldéhyde sulfoxylate de sodium ou de zinc...

les composés azoaliphatiques présentant un groupe azocyclique et au moins un atome de carbone aliphatique sur chaque atome d'azote, au moins un des atomes de carbone étant tertiaire, tels que l'azobisisobutyronitrile, le 2,2'azobis(2,4-diméthylvaléronitrile), le 2,2'azobis(2,4-diméthyl-4 méthoxyvaléronitrile)...

Comme exemples d'émulsifiants non-ioniques on peut citer les alcools gras polyéthoxylés, les alkylphénols polyéthoxylés, les acides gras polyéthoxylés...

Comme exemples d'émulsifiants cationiques, on peut citer :

- le décylammonium méthylsulfate,
- le bromure de N-éthyldodécylammonium,
- le chlorure de céthylammonium,
- le bromure de céthylammonium,
- le bromure de stéarylammonium,
- le bromure de céthyldiméthylbenzylammonium,
- le chlorure de N,N-diméthyldodécylammonium,
- l'iodure de N-méthyltridécylammonium,
- les chlorures, bromures, sulfates, méthylsulfates ou acétates d'amines grasses éthoxylées.

La quantité d'amorceur mise en oeuvre pour réaliser l'opération de polymérisation est fonction du ou des monomères mis en oeuvre et de la température de polymérisation ; celle-ci est généralement de l'ordre de 0,1 à 5% en poids par rapport au poids total de monomères, et de préférence de l'ordre de 0,1 à 2%.

Il est bien évident que si l'amorceur est le principal constituant ou un des constituants de la substance génératrice de charges cationiques, un excès par rapport à ces quantités doit être utilisé.

La quantité d'émulsifiant cationique ou non-ionique mise en oeuvre pour stabiliser les particules de copolymères peut aller jusqu'à 2% du poids total de monomères.

Les dispersions aqueuses cationiques de polymères synthétiques faisant l'objet de l'invention présentent un potentiel zéta pouvant varier depuis + 80 mV à + 20 mV lorsque le pH passe de 2 à 12 par exemple.

Lesdites dispersions cationiques peuvent être utilisées comme liants pour le couchage du papier, pour la préparation de voiles de non-tissés, pour le revêtement de substrats métalliques etc.

Les exemples suivants sont donnés à titre indicatif et ne peuvent être considérés comme une limite du domaine et de l'esprit de l'invention.

Exemple 1

L'opération de polymérisation décrite ci-après est réalisée dans un autoclave de 5 litres de capacité muni d'un agitateur du type à ancre tournant à 180 t/mn.

On charge à froid dans l'autoclave :

- 866 g d'eau désionisée,
- 7,5 g de bromure de cétyldiméthylbenzylammonium
- 15 g de chlorure de triméthylaminopropylméthacrylamide,
- 15 g de diméthylaminopropylméthacrylamide.

On porte l'autoclave à une température de 75°C ; on introduit alors 7,5 g de chlorhydrate de 2-2'azobis(2 amidinopropane) comme amorceur cationique avec 50 g d'eau désionisée, puis en continu pendant 5 heures sous débit constant :

- 750 g d'acrylate de butyle,
- 660 g de styrène,
- 60 g de diméthylaminopropylméthacrylamide.

On laisse ensuite la réaction se poursuivre pendant 4 heures à 75°C. Après un temps total de marche de 9 heures la réaction est arrêtée par refroidissement.

Le produit obtenu est un latex stable sans croûtes présentant les caractéristiques suivantes :

| | |
|---|---|
| pH | 7,2 |
| quantité d'extrait sec | 46,2% en poids |
| viscosité Brookfield (50 t/mn) | 1980 mPa.s |
| diamètre moyen des particules | 0,1 µ |
| taux de grains | 126 ppm |

Le taux de grains est déterminé par tamisage au travers de toiles présentant des ouvertures de mailles de 40 et 100 µ. La teneur totale en grains correspond à la somme des teneurs en grains des différents tamis.

Le caractère cationique de la dispersion ainsi préparée est mis en évidence par mesure du potentiel zéta en fonction du pH. La mesure est effectuée à livide d'un appareil de microélectrophorèse Mark II fabriqué par Rank Brothers et réalisée à une concentration de 0,05% en polymère sous une tension de mesure de 80 volts et à une température de 25°C.

Les résultats de cette mesure sont les suivants :

| pH | potentiel zéta en mV |
|---|---|
| 4 | +60 |
| 6 | +52 |
| 8 | +38 |
| 10 | +32 |

Exemple 2

On charge à froid dans l'autoclave ;
- 940 g d'eau désionisée
- 9,6 g de bromure de cétyldiméthylbenzylammonium
- 9,6 g de chlorure de triméthylaminopropylméthacrylamide
- 24 g de diméthylaminopropylméthacrylamide
- 72 g d'acétate de vinyle.

On porte l'autoclave à une température de 80°C ; on introduit alors sous débit constant pendant 5 heures:
- 1100 g d'acétate du vinyle
- 9 g de chlorhydrate de 2-2′ azobis(2 amidinopropane)
- 210 g d'eau déionisée
- 3,6 g de bicarbonate de sodium.

On laisse la réaction se dérouler pendant 4 heures.

On obtient un latex stable exempt de croûtes et présentant les caractéristiques suivantes :

| | |
|---|---|
| pH | 5,2 |
| quantité d'extrait sec | 47,1% en poids |
| viscosité Brookfield (50 t/mn) | 210 mPa.s |
| diamètre moyen des particules | 0,12 µ |
| taux de grains | 305 ppm |

Les résultats de mesure du potentiel zéta sont les suivants :

| pH | potentiel zéta en mV |
|---|---|
| 4 | +52 |
| 6 | +48 |
| 8 | +30 |
| 10 | +22 |

Exemple 3

On charge à froid dans l'autoclave :
- 866 g d'eau désionisée
- 7,5 g de bromure de cétyldiméthylbenzylammonium
- 15 g de chlorure de triméthylaminoprópylméthacrylamide

– 15 g de diméthylaminopropylméthacrylamide.

On porte l'autoclave à une température de 75°C ; on introduit alors 7,5 g de chlorhydrate de 2-2′ azobis(2 amidinopropane) avec 50 g d'eau désionisée, puis en continu pendant 5 heures sous débit constant :

– 1410 g de styrène

– 60 g de diméthylaminopropylméthylacrylamide.

On laisse ensuite la réaction se poursuivre pendant 4 heures à 75°C.

Le produit obtenu est un latex stable sans croûtes présentant les caractéristiques suivantes :

| | |
|---|---|
| pH | 7,8 |
| quantité d'extrait sec | 47,1% en poids |
| viscosité Brookfield (50 t/mn) | 210 mPa.s |
| diamètre moyen des particules | 0,12 µ |
| taux de grains | 182 ppm |

Les résultats de mesure du potentiel zéta sont les suivants :

| pH | potentiel zéta en mV |
|---|---|
| 4 | +58 |
| 6 | +64 |
| 8 | +45 |
| 10 | +24 |

Exemple 4

On charge à froid dans l'autoclave :

– 866 g d'eau désionisée

– 7,5 g de bromure de cétyldiméthylbenzylammonium

– 15 g de chlorure de triméthylaminopropylméthacrylamide

On porte l'autoclave à une température de 75°C ; on introduit alors 7,5 g de chlorhydrate de 2-2′ azobis(2 amidinopropane) avec 50 g d'eau désionisée, puis en continu pendant 5 heures sous débit constant :

– 750 g d'acrylate de butyle

– 690 g de styrène

– 45 g de diméthylaminopropylméthacrylamide.

On laisse la réaction se dérouler pendant 4 heures à 75°C.

On obtient une dispersion qui présente les caractéristiques suivantes :

| | |
|---|---|
| pH | 7,8 |
| quantité d'extrait sec | 46% en poids |
| viscosité Brookfield (50 t/mn) | 70 mPa.s |
| diamètre moyen des particules | 0,1 µ |
| taux de grains | 255 ppm |

Les résultats de mesure de potentiel zéta sont les suivants :

| pH | potentiel zéta en mV |
|---|---|
| 4 | +56 |
| 6 | +52 |
| 8 | +32 |
| 10 | +15 |

Exemple 5

On charge à froid dans l'autoclave :

– 866 g d'eau désionisée

– 7,5 g de bromure de cétyldiméthylbenzylammonium

– 15 g de chlorure de triméthylaminopropylméthacrylamide

– 45 g de tertiobutylaminopropylméthacrylamide.

On porte l'autoclave à une température de 75°C ; on introduite alors 7,5 g de chlorhydrate de 2-2′ azobis(2 amidinopropane) avec 50 g d'eau désionisée, puis en continu pendant 5 heures sous débit constant :

– 750 g d'acrylate de butyle
– 645 g de styrène
– 45 g de tertiobutylaminopropylméthylamide.

On laisse la réaction se dérouler pendant 4 heures à 75°C.

On obtient un latex exempt de croûtes présentant les caractéristiques suivantes :

| | |
|---|---|
| pH | 7,65 |
| quantité d'extrait sec | 41,5% en poids |
| viscosité Brookfield (50 t/mn) | 70 mPa.s |
| diamètre moyen des particules | 0,1 μ |
| taux de grains | 350 ppm |

Les résultats de mesure de potentiel zéta sont les suivants :

| pH | potentiel zéta en mV |
|---|---|
| 4 | +54 |
| 6 | +54 |
| 8 | +31 |
| 10 | +20 |

Exemple 6

On charge à froid dans l'autoclave :

– 866 g d'eau désionisée
– 7,5 g de bromure de cétyldiméthylbenzylammonium
– 15 g de chlorure de triméthylaminopropylméthacrylamide
– 45 g de tertiobutylaminopropylméthacrylamide.

On porte l'autoclave à une température de 75°C ; on introduit alors 7,5 g de chlorhydrate de 2-2′ azobis(2 amidinopropane) avec 50 g d'eau désionisée, puis en continu pendant 5 heures sous débit constant :

– 750 g d'acrylate de butyle
– 690 g de styrène

On laisse la réaction se dérouler pendant 4 heures à 75°C.

On obtient un latex stable exept de croûtes présentant les caractéristiques suivantes :

| | |
|---|---|
| pH | 7,25 |
| quantité d'extrait sec | 46,8% en poids |
| viscosité Brookfield (50 t/mn) | 1540 mPa.s |
| diamètre moyen des particules | 0,1 μ |
| taux de grains | 196 ppm |

Les résultats de mesure de potentiel zéta sont les suivants :

| pH | potentiel zéta en mV |
|---|---|
| 4 | +46 |
| 6 | +48 |
| 8 | +25 |
| 10 | +19 |

Exemple 7

On charge à froid dans l'autoclave :

– 866 g d'eau désionisée
– 7,5 g de bromure de céthyldiméthylbenzylammonium
– 15 g de chlorure de triméthylaminopropylméthacrylamide

- 15 g de diméthylaminopropylméthacrylamide.
- 75 g de styrène
- 66 g d'acrylate de butyle.

On porte l'autoclave à une température de 75°C ; on introduit alors 7,5 g de chlorhydrate de 2-2′ azobis(2 amidinopropane) avec 50 g d'eau désionisée ; on attend la fin de l'exothermie (30 mn environ, ce qui correspond à un taux de transformation de 80%), puis en continu pendant 5 heures sont débit constant :

- 594 g d'acrylate de butyle
- 675 g de styrène
- 60 g de diméthylaminopropylméthacrylamide.

ainsi que 15 g de chlorhydrate de 2-2′azobis(amidinopropane) avec 420 g d'eau désionisée.

On laisse la réaction se dérouler pendant 4 heures.

On obtient une dispersion qui présente les caractéristiques suivantes :

| | |
|---|---|
| pH | 7,8 |
| quantité d'extrait sec | 45,9% en poids |
| viscosité Brookfield (50 t/mn) | 152 mPa.s |
| diamètre moyen des particules | 0,12 µ |
| taux de grains | 155 ppm |

Les résultats de mesure de potentiel zéta sont les suivants :

| pH | potentiel zéta en mV |
|---|---|
| 4 | +62 |
| 6 | +58 |
| 8 | +36 |
| 10 | +28 |

Exemple 8

On charge à froid dans l'autoclave :

- 866 g d'eau désionisée
- 7,5 de de bromure de cétyldiméthylbenzylammonium
- 15 g de diméthylaminopropylméthacrylamide
- 75 g de styrène
- 66 g d'acrylate de butyle.

On porte l'autoclave à une température de 80°C ; on introduit alors 15 g de chlorhydrate de 2-2′azobis(2 amidinopropane) avec 50 g d'eau désionisée ; on attend la fin de l'exothermie (30 mn environ, ce qui correspond à un taux de transformation de 90%), puis en continu pendant 5 heures sous débit constant.

- 594 g d'acrylate de butyle
- 705 g de styrène
- 60 g de diméthylaminopropylméthacrylamide.

ainsi que 15 g de chlorhydrate de 2-2′azobis(amidinopropane) avec 420 g d'eau désionisée.

On laisse la réaction se dérouler pendant 4 heures.

On obtient un latex stable exempt de croûtes présentant les caractéristiques suivantes :

| | |
|---|---|
| pH | 7,6 |
| quantité d'extrait sec | 42.3% en poids |
| viscosité Brookfield (50 t/mn) | 82 mPa.s |
| diamètre moyen des particules | 0,11 µ |
| taux de grains | 190 ppm |

Les résultats de mesure de potentiel zéta sont les suivants :

| pH | potentiel zéta en mV |
|---|---|
| 4 | +48 |
| 6 | +36 |
| 8 | +32 |
| 10 | +19 |

Exemple 9

On charge à froid dans l'autoclave :
- 866 g d'eau déionisée
- 30 g de chlorure de triméthylaminopropylméthacrylamide
- 75 g de styrène
- 66 g d'acrylate de butyle.

On porte l'autoclave à une température de 75°C ; on introduit alors 7,5 g de chlorhydrate de 2-2′ azobis(2 amidinopropane) avec 50 g d'eau désionisée ; on attend la fin de l'exothermie (30 mn environ, ce qui correspond à un taux de transformation de 80%), puis en continu pendant 5 heures sous débit constant :
- 594 g d'acrylate de butyle
- 675 g de styrène
- 60 g de diméthylaminopropylméthacrylamide.

ainsi que 15 g de chlorhydrate de 2-2′azobis(amidinopropane) avec 420 g d'eau désionisée.

On laisse la réaction se dérouler pendant 4 heures.

On obtient un latex stable exempt de croûtes présentant les caractéristiques suivantes :

| | |
|---|---|
| pH | 7,9 |
| quantité d'extrait sec | 40,3% en poids |
| viscosité Brookfield (50 t/mn) | 59 mPa.s |
| diamètre moyen des particules | 0,16 μ |
| taux de grains | 420 ppm |

Les résultats de mesure de potentiel zéta sont les suivants :

| pH | potentiel zéta en mV |
|---|---|
| 4 | +66 |
| 6 | +52 |
| 8 | +38 |
| 10 | +22 |

Exemple 10

On charge à froid dans l'autoclave :
- 866 g d'eau déionisée
- 7,5 g de bromure de cétyldiméthylbenzylammonium
- 15 g de chlorure de triméthylaminopropylméthacrylamide

On porte l'autoclave à une température de 75°C ; on introduit alors 7,5 g de chlorhydrate de 2-2 azobis(2-amidinopropane) comme amorceur cationique avec 50 g d'eau désionisée, puis en continu pendant 5 heures sous débit constant :
- 750 g d'acrylate de butyle
- 660 g de styrène.

On laisse ensuite la réaction se dérouler pendant 4 heures à 75°C. Le taux de transformation est alors de 90% puis on ajoute pendant 1 heure 75 g de diméthylaminopropylméthacrylamide.

Après un temps total de 12 h 30 la réaction est arrêté par refroidissement.

Le produit résultant est un latex stable sans croûtes présentant les caractéristiques suivantes :

| | |
|---|---|
| pH | 7,9 |
| quantité d'extrait sec | 46,3% |
| Viscosité Brookfield (50 t/mn) | 453 mPa.s |
| diamètre moyen des particules | 0,12 μ |
| taux de grains | 485 ppm |

Les résultats de mesure du potentiel zéta sont les suivants :

| pH | potentiel zéta en MV |
|---|---|
| 4 | +58 |
| 6 | +49 |
| 8 | +31 |
| 10 | +23 |

Exemple 11

On répète l'opération décrite à l'exemple 7 en remplaçant les 15 g de chlorure de triméthylaminopropylméthacrylamide par 15 g de chlorure de 1-méthyl 2-vinylpyridinium.

On obtient un latex présentant les caractéristiques suivantes :

| | |
|---|---|
| pH | 7,8 |
| quantité d'extrait sec | 45,8 |
| viscosité Brookfield (50 t/mn) | 116 mPa.s |
| diamètre moyen des particules | 0,1 μ |
| taux de grains | 475 ppm |

Les résultats de mesure de potentiel zéta sont les suivants :

| pH | potentiel zéta en mV |
|---|---|
| 4,5 | +48 |
| 6 | +42 |
| 8 | +26 |
| 10 | +19 |

Exemple 12

On répète l'opération décrite à l'exemple 4 en remplaçant les 45 g de diméthylaminopropylméthacrylamide par 45 g de ditertiobutylaminopropylméthacrylate.

Le latex obtenu présente les caractéristiques suivantes

| | |
|---|---|
| pH | 8,2 |
| quantité d'extrait sec | 46,5% en poids |
| viscosité Brookfield (50 t/mn) | 128 mPa.s |
| diamètre moyen des particules | 0,11 μ |
| taux de grains | 360 ppm |

Les résultats de mesure de potentiel zéta sont les suivants :

| pH | potentiel zéta en mV |
|---|---|
| 4 | +38 |
| 6 | +36 |
| 8 | +20 |
| 10 | +18 |

Exemple 13

On charge à froid dans l'autoclave :
- 866 g d'eau désionisée
- 7,5 g de bromure de céthyldiméthylbenzylammonium
- 30 g de chlorure de 1-méthyl 2-vinylpyridinium
- 30 g de diméthylaminopropylméthacrylamide.

On porte l'autoclave à une température de 75°C ; on introduit alors 7,5 g de chlorhydrate de 2-2'azobis(2 amidinopropane) comme amorceur cationique avec 50 g d'eau désionisée, puis en continu pendant 5 heures sous débit constant :
- 750 g d'acrylate de butyle,
- 630 g de styrène,
- 60 g de diméthylaminopropylméthacrylamide.

On laisse ensuite la réaction se poursuivre pendant 4 heures à 75°C. Après un temps total de marche de 9 heures la réaction est arrêtée par refroidissement.

Le produit obtenu est un latex stable sans croûtes présentant les caractéristiques suivantes :

| | |
|---|---|
| pH | 8,5 |
| quantité d'extrait sec | 47,2% en poids |
| viscosité Brookfield (50 t/mn) | 270 mPa.s |
| diamètre moyen des particules | 0,12 μ |
| taux de grains | 215 ppm |

Les résultats de mesure du potentiel zéta sont les suivants :

| pH | potentiel zéta en mV |
|---|---|
| 4 | +68 |
| 6 | +66 |
| 8 | +44 |
| 10 | +26 |

Exemple 14

On charge à froid dans l'autoclave :
- 866 g d'eau désionisée
- 162,3 g du latex obtenu à l'exemple 1 (soit 75 g de matière sèche)
- 15 g de chlorure de triméthylaminopropylméthacrylamide.

On porte l'autoclave à une température de 75°C ; on introduit alors 7,5 g de chlorhydrate de 2,2'-azobis(2-amidinopropane) comme amorceur cationique avec 50 g d'eau désionisée, puis en continu pendant 5 heures sous débit constant :
- 750 g d'acrylate de butyle
- 675 g de styrène
- 60 g de diméthylaminopropylméthacrylamide.

On laisse la réaction se poursuivre pendant 4 heures à 75°C. Après un temps total de marche de 9 heures, la réaction est arrêtée par refroidissement.

On obtient un latex présentant les caractéristiques suivantes :

| | |
|---|---|
| pH | 7,5 |
| quantité d'extrait sec | 44,6% |
| viscosité Brookfield (50 t/mn) | 288 mPa.s |
| diamètre moyen des particules | 0,22 μ |
| taux de grains | 405 ppm |

Les résultats de mesure de potentiel zéta sont les suivants :

| pH | potentiel zéta en mV |
|---|---|
| 4 | +48 |
| 6 | +36 |
| 8 | +20 |
| 10 | +18 |

## Revendications

### Revendications pour les Etats contractants BE CH DE FR GB IT LI LU NL SE

1. Dispersions aqueuses cationiques de polymères synthétiques caractérisées en ce qu'elles sont obtenues en mettant en présence au moins un composé azoté tertiaire insaturé non-hydrolysable en milieu acide ou alcalin représenté par :

a) les N(ω dialkylaminoalkyl)amides d'acides carboxyliques insaturés de formule I

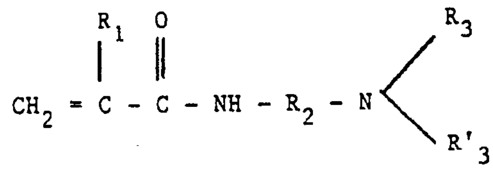

où :

- $R_1$ représente un atome d'hydrogène ou un groupe alkyle en $C_1$-$C_4$
- $R_2$représente un groupe alkylène en $C_1$-$C_{12}$ ; $R_3$ et $R'_3$ représentent des groupes alkyles en $C_1$-$C_6$, phényles éventuellement substitués par un radical alkyle en $C_1$-$C_9$ ;

b) les aminoesters insaturés de formule II

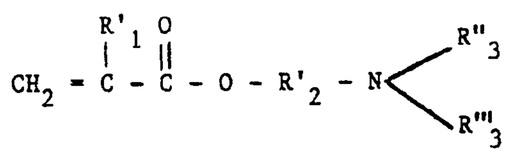

où :

- $R'_1$ représente un groupe alkyle en $C_1$-$C_5$
- $R'_2$ représente un groupe alkylène linéaire ou ramifié contenant au moins 2 atomes de carbone
- $R''_3$ et $R'''_3$ sont identiques ou différents et représentent un groupe alkyle en $C_1$-$C_6$, éventuellement substitué par un radical hydroxy, un groupe phényle éventuellement substitué par un radical alkyle en $C_1$-$C_9$ le nombre total d'atomes de carbone contenus dans les radicaux $R'_2$, $R''_3$et $R'''_3$ devant être supérieur à 8;

c) les composés azotés hétérocycliques renfermant un atome d'azote ou de carbone substitué par un groupe vinyle ;

avec le milieu réactionnel (A) d'une opération de polymérisation en émulsion aqueuse d'au moins un monomère non ionogène copolymérisable avec ledit composé azoté tertiaire insaturé non hydrolysable, ledit milieu réactionnel (A) contenant des charges essentiellement cationiques apportées par au moins une substance génératrice de charges cationiques liable chimiquement auxdits polymères synthétiques constituée par un sel insaturé copolymérisable d'onium polycoordonné d'un élément des groupes VB et VIB.

2. Dispersions selon la revendication 1 caractérisées en ce que ledit composé azoté tertiaire insaturé non-hydrolysable est mis en présence du milieu réactionnel (A) à un stade quelconque de l'opération de polymérisation du ou des monomères non ionogènes copolymérisables avec le composé azoté tertiaire insaturé non-hydrolysable.

3. Dispersions selon la revendication 1 ou 2 caractérisées en ce que dans la formule I, $R_1$ représente un groupe alkyle en $C_1$-$C_2$, $R_2$ représente un groupe alkylène en $C_1$-$C_8$, et $R_3$ et $R'_3$ représentent des groupes alky-

les en $C_1$-$C_4$.

4. Dispersions selon la revendication 3 caractérisées en ce que le composé azoté tertiaire insaturé non-hydrolysable est du diméthylaminométhylacrylamide ou méthacrylamide ou du diméthylaminoéthylacrylamide ou méthacrylamide.

5. Dispersions selon la revendication 1 ou 2 caractérisées en ce que dans la formule II R'1 est un groupe alkyle en $C_1$-$C_2$, $R'_2$ est un groupe alkylène linéaire ou ramifié en $C_2$-$C_{12}$, $R''_3$ et $R'''_3$ sont des groupes alkyles en $C_1$-$C_4$, le nombre total d'atomes de carbone contenus dans les radicaux $R'_2$, $R''_3$ et $R'''_3$ devant être supérieur ou égal à 10.

6. Dispersions selon la revendication 5 caractérisées en ce que le composé azoté tertiaire insaturé non hydrolysable est du diterbutylaminoéthylméthacrylate, du diterbutylaminopropylméthacrylate ou du dipentylaminoéthylméthacrylate.

7. Dispersions selon l'une quelconque des revendications précédentes caractérisées en ce que le ou les monomères non ionogènes copolymérisables avec le composé azoté tertiaire insaturé non hydrolysable sont des composés vinylaromatiques, des esters vinyliques, des nitriles éthyléniques, des esters carboxyliques éthyléniques, des dialkylesters de diacides carboxyliques éthyléniques ou des amides éthyléniques et leurs dérivés N-substitués.

8. Dispersions selon l'une quelconque des revendications précédentes caractérisées en ce que la substance génératrice de charges cationiques comprend un amorceur de polymérisation générateur de radicaux présentant une extrémité cationique en addition au sel insaturé copolymérisable d'onium polycoordonné d'un élément des groupes VB et VIB.

9. Dispersions selon la revendication 8) caractérisées en ce que la substance génératrice de charges cationiques est un sel insaturé d'ammonium quaternaire de formule :

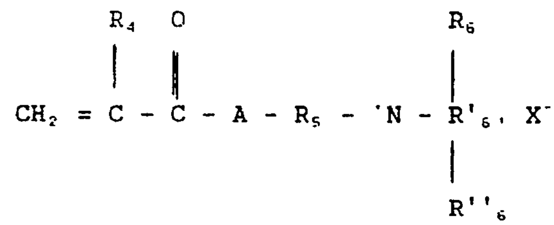

où

- $X^-$ est choisi parmi les anions suivants : $Cl^-$, $Br^-$, $I^-$, $SO_4H^-$, $SO_4^{--}$, $CH_3,SO_4^-$, $C_2H_5SO_4^-$, $CH_3COO^-$
- $R_4$ représente un atome d'hydrogène ou un groupe méthyle
- A représente un atome d'oxygène ou un groupe –NH–
- $R_5$ représente un groupe alkylène linéaire ou ramifié contenant de 1 à 18 atomes de carbone.
- $R_6$, $R'_6$, $R''_6$, sont semblables ou différents et représentent un groupe alkyle contenant de à 4 atomes de carbone éventuellement substitué par un radical hydroxy, un groupe phényle éventuellement substitué par un radical alkyle contenant de 1 à 9 atomes de carbone.
- le nombre total d'atomes de carbone présent dans les groupes $R_5$, $R_6$, $R'_6$ et $R''_6$ est supérieur à 4 quand A représente de l'oxygène.

10. Dispersions selon la revendication 9 caractérisées en ce que le sel insaturé d'ammonium quaternaire est du chlorure de triméthylaminoéthylacrylamide, du bromure de triméthylaminopropylacrylamide ou méthacrylamide, du méthylsulfate de triméthylaminobutylacrylamide ou méthacrylamide, ou du chlorure de triméthylaminopropylméthacrylate.

11. Dispersions selon la revendication 8 caractérisées en ce que la substance génératrice de charge cationique est un sel insaturé de pyridinium, de quinolinium, d'imidazolium ou de benzimidazolium.

12. Dispersions selon l'une quelconque des revendications précédentes caractérisées en ce que la mise en oeuvre de la substance génératrice de charges cationiques dans le milieu réactionnel (A) est préalable à celle du composé azoté tertiaire insaturé non hydrolysable ou concomittante de celle dudit composé azoté insaturé.

13. Dispersions selon l'une quelconque des revendications, précédentes caractérisées en ce que la substance génératrice de charges cationiques est présente dans le milieu réactionnel (A) au départ de l'opération de polymérisation par l'intermédiaire d'une "semence cationique."

14. Dispersions selon l'une quelconque des revendications précédentes caractérisées en ce qu'on met en oeuvre pour 100 parties en poids de monomère(s) non ionogène(s) :

- de 1 à 20 parties en poids de substance génératrice de charges cationiques,

- au moins 4 parties en poids au total de substance génératrice de charges cationiques et de composé azoté insaturé.

15. Dispersions selon la revendication 14 caractérisées en ce que l'on met en oeuvre pour 100 parties en poids de monomère(s) non ionogène(s) :

- de 2 à 10 parties en poids de substance génératrice de charges cationiques ;
- de 4 à 15 parties en poids au total de substance génératrice de charges cationiques et de composé azoté insaturé.

16. Dispersions selon l'une quelconque des revendications précédentes caractérisées en ce que l'opération du polymérisation est réalisée à une température comprise entre 60 et 90°C, à un pH quelconque en présence d'un amorceur cationique ou non-ionique et éventuellement d'un agent émulsifiant cationique ou non ionique.

17. Application des dispersions aqueuses cationiques de polymères synthétiques faisant l'objet de l'une quelconque des revendications précédentes, comme liants.

**Revendications pour l'Etat Contractant : AT**

1. Procédé de préparation de dispersions aqueuses cationiques de polymères synthétiques caractérisé en ce que l'on met en présence au moins un composé azoté tertiaire insaturé non-hydrolysable en milieu acide ou alcalin représenté par :

a) les N(ωdialkylaminoalkyl)amides d'acides carboxyliques insaturés de formule I

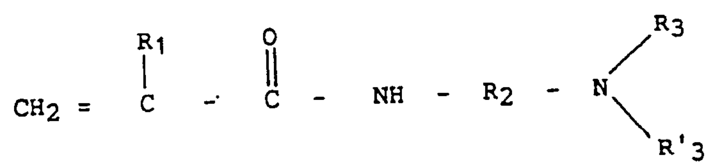

où :

- $R_1$ représente une atome d'hydrogène ou un groupe alkyle en $C_1$-$C_4$
- $R_2$ représente un groupe alkylène en $C_1$-$C_{12}$ : $R_3$ et $R'_3$ représentent des groupes alkyles en $C_1$-$C_6$, phényles éventuellement substitués par un radical alkyle en $C_1$-$C_9$ ;

b) les aminoesters insaturés de formule II

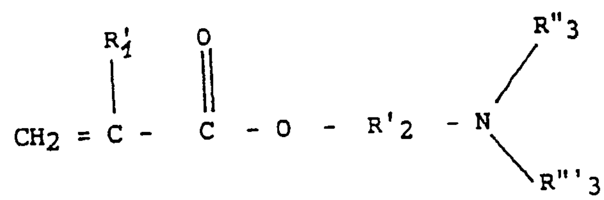

où :

- $R'_1$ représente un groupe alkyle en $C_1$-$C_5$
- $R'_2$ représente un groupe alkylène linéaire ou ramifié contenant au moins 2 atomes de carbone
- $R''_3$ et $R'''_3$ sont identiques ou différents et représentant un groupe alkyle en $C_1$-$C_6$ éventuellement substitué par un radical hydroxy, un groupe phényle éventuellement substitué par un radical alkyle en $C_1$-$C_9$ le nombre total d'atomes de carbone contenus dans les radicaux $R'_2$, $R''_3$ et $R'''_3$devant être supérieur à 8 ;

c) les composés azotés hétérocycliques renfermant un atome d'azote ou de carbone substitué par un groupe vinyle ;

avec le milieu réactionnel (A) d'une opération de polymérisation en émulsion aqueuse d'au moins un monomère non ionogène copolymérisable avec ledit composé azote tertiaire insaturé non hydrolysable, ledit milieu réactionnel (A) contenant des charges essentiellement cationiques apportées par au moins une substance génératrice de charges cationiques liable chimiquement auxdits polymères synthétiques constituée par un sel insaturé copolymérisable d'onium polycoordonné d'un élément des groupes VB et VIB.

2. Procédé selon la revendication 1 caractérisé en ce que ledit composé azoté tertiaire insaturé non-hydrolysable est mis en présence du milieu réactionnel (A) à un stade quelconque de l'opération de polymérisation du ou des monomères non ionogènes copolymérisables avec le composé azoté tertiaire insaturé non-hydro-

lysable.

3. Procédé selon la revendication 1 ou 2, caractérisé en ce que dans la formule I $R_1$ représente un groupe alkyle en $C_1$-$C_2$, $R_2$ représente un groupe alkylène en $C_1$-$C_8$, $R_3$ et $R'_3$ représentent des groupes alkyles en $C_1$-$C_4$.

4. Procédé selon la revendication 3 caractérisé en ce que le composé azoté tertiaire insaturé non hydrolysable est du diméthylaminométhylacrylamide ou méthacrylamide ou du diméthylaminoéthylacrylamide ou méthacrylamide.

5. Procédé selon la revendication 1 ou 2 caractérisé en ce que dans la formule II $R'_1$ est un groupe alkyle en $C_1$-$C_2$, $R'_2$ est un groupe alkylène linéaire ou ramifié en $C_2$-$C_{12}$, $R''_3$ et $R'''_3$ sont des groupes alkyles en $C_1$-$C_4$, le nombre total d'atomes de carbone contenus dans les radicaux $R'_2$, $R''_3$ et $R'''_3$ devant être supérieur ou égal à 10.

6. Procédé selon la revendication 5, caractérisé en ce que le composé azoté tertiaire insaturé non hydrolysable est du diterbutylaminoéthylméthacrylate, du diterbutylaminopropylméthacrylate ou du dipentylaminoéthylméthacrylate.

7. Procédé selon l'une quelconque des revendications précédentes caractérisé en ce que le ou les monomères non ionogènes copolymérisables avec le composé azoté tertiaire insaturé non hydrolysable sont des composés vinylaromatiques, des esters vinyliques, des nitriles éthyléniques, des esters carboxyliques éthyléniques, des dialkylesters de diacides carboxyliques éthyléniques ou des amides éthyléniques et leurs dérivés N-substitués.

8. Procédé selon l'une quelconque des revendications précédentes caractérisé en ce que la substance génératrice de charges cationiques est constituée par un amorceur de polymérisation générateur de radicaux présentant une extrémité cationique et un sel insaturé copolymérisable d'onium polycoordiné d'un élément des groupes VB et VIB.

9. Procédé selon la revendication 8) caractérisé en ce que la substance génératrice de charges cationiques est un sel insaturé d'ammonium quaternaire de formule :

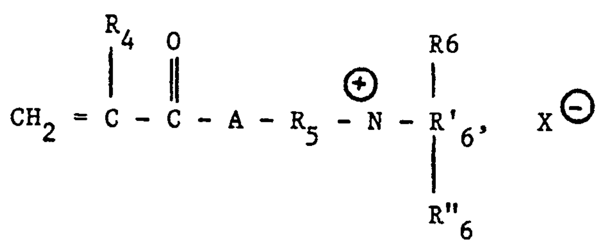

où

- $X^-$ est choisi parmi les anions suivants : $Cl^-$, $Br^-$, $I^-$, $SO_4H^-$, $SO_4^{--}$, $CH_3SO_4^-$, $C_2H_5SO_4^-$, $CH_3COO^-$,
- $R_4$ représente un atome d'hydrogène ou un groupe méthyle
- A représente un atome d'oxygène ou un groupe –NH–
- $R_5$ représente un groupe alkylène linéaire ou ramifié contenant de 1 à 18 atomes de carbone.
- $R_6$, $R'_6$, $R''_6$ sont semblables ou différents et représentent un groupe alkyle contenant de 1 à 4 atomes de carbone éventuellement substitué par un radical hydroxy, un groupe phényle éventuellement substitué par un radical alkyle contenant de 1 à 9 atomes de carbone.
- le nombre total d'atomes de carbone présent dans les groupes $R_5$, $R_6$, $R'_6$ et $R''_6$ est supérieur à 4 quand A représente de l'oxygène.

10. Procédé selon la revendication 9 caractérisé en ce que le sel insaturé d'ammonium quaternaire est du chlorure de triméthylaminoéthylacrylamide, du bromure de triméthylaminopropylacrylamide ou méthacrylamide, du méthylsulfate de triméthylaminobutylacrylamide ou méthacrylamide, ou du chlorure de triméthylaminopropylméthacrylate.

11. Procédé selon la revendication 8 caractérisé en ce que la substance génératrice de charge cationique est un sel insaturé de pyridinium, de quinolinium, d'imidazolium ou de benzimidazolium.

12. Procédé selon l'une quelconque des revendications précédentes caractérisé en ce que la mise en oeuvre de la substance génératrice de charges cationiques dans le milieu réactionnel (A) est préalable à celle du composé azoté tertiaire insaturé non hydrolysable ou concomittante de celle dudit composé azoté insaturé.

13. Procédé selon l'une quelconque des revendications précédentes caractérisé en ce que la substance génératrice de charges cationiques est présente dans le milieu réactionnel (A) au départ de l'opération de polymérisation par l'intermédiaire d'une "semence cationique".

14. Procédé selon l'une quelconque des revendications précédentes caractérisé en ce qu'on met en oeuvre pour 100 parties en poids de monomère(s) non ionogène(s) :

de 1 à 20 parties en poids de substance génératrice de charges cationiques,

au moins 4 parties en poids au total de substance génératrice de charges cationiques et de composé azoté insaturé.

15. Procédé selon la revendication 17 caractérisé en ce que l'on met en oeuvre pour 100 parties en poids de monomère(s) non ionogène(s) :

de 2 à 10 parties en poids de substance génératrice de charges cationiques ;

de 4 à 15 parties en poids au total de substance génératrice de charges cationiques et de composé azoté insaturé.

16. Procédé selon l'une quelconque des revendications précédentes caractérisé en ce que l'opération de polymérisation est réalisée à une température comprise entre 60 et 90°C, à un pH quelconque en présence d'un amorceur cationique ou non-ionique et éventuellement d'un agent émulsifiant cationique ou non ionique.

17. Application des dispersions aqueuses cationiques de polymères synthétiques obtenues selon le procédé faisant l'objet de l'une quelconque des revendications précédentes, comme liants.

**Claims**

**Claims for Contracting States BE CH DE FR GB IT LI LU NL SE**

1. Cationic aqueous dispersions of synthetic polymers characterised in that they are produced by bringing together at least one unsaturated tertiary nitrogen compound which is non-hydrolysable in an acid or alkaline medium represented by :

a) N(ωdialkylaminoalkyl)amides of unsaturated carboxylic acids of formula I :

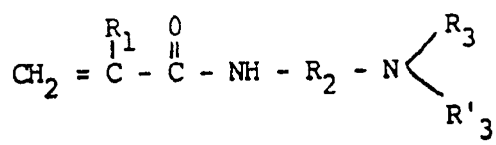

in which :

- $R_1$ represents a hydrogen atom or a $C_1$-$C_4$ alkyl group,
- $R_2$ represents a $C_1$-$C_{12}$ alkylene group ; $R_3$ and $R'_3$ represent $C_1$-$C_8$ alkyl groups and phenyl groups which are optionally substituted by a $C_1$-$C_9$ alkyl radical ;

b) unsaturated amino esters of formula II :

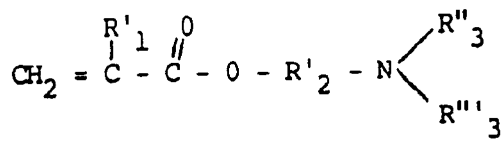

in which :

- $R'_1$ represents a $C_1$-$C_5$ alkyl group,
- $R'_2$ represents a straight or branched chain alkylene group containing at least two carbon atoms, and
- $R''_3$ and $R'''_3$ are identical or different and represent a $C_1$-$C_6$ alkyl group optionally substituted by a hydroxy radical, or a phenyl group optionally substituted by a $C_1$-$C_9$ alkyl radical, the total number of carbon atoms contained in the radicals $R'_2$, $R''_3$ and $R'''_3$ having to be greater than 8 ;

c) the heterocyclic nitrogen compounds containing a nitrogen atom or a carbon atom substituted by a vinyl group ;

and the reaction medium (A) of an operation for polymerisation in aqueous emulsion of at least one non-ionogenic monomer copolymerisable with said non-hydrolysable unsaturated tertiary nitrogen compound, said reaction medium (A) containing essentially cationic charges provided by at least one substance for generating cationic charges which can be chemically bonded to said synthetic polymers and formed by a copolymerisable unsaturated salt of polyco-ordinated onium of an element of groups VB and VIB.

2. Dispersions according to claim 1 characterised in that said non-hydrolysable unsaturated tertiary nitrogen compound is brought together with the reaction medium (A) at any stage in the operation for polymerisation of the non-ionogenic monomer or monomers copolymerisable with the non-hydrolysable unsaturated tertiary nitrogen compound.

3. Dispersions according to claim 1 or claim 2 characterised in that in formula I, $R_1$ represents a $C_1$-$C_4$ alkyl group, $R_2$ represents a $C_1$-$C_8$ alkylene group and $R_3$ and $R'_3$ represent $C_1$-$C_4$ alkyl groups.

4. Dispersions according to claim 3 characterised in that the non-hydrolysable unsaturated tertiary nitrogen compound is dimethylaminomethylacrylamide or methacrylamide, or dimethylaminoethylacrylamide or methacrylamide.

5. Dispersions according to claim 1 or claim 2 characterised in that in formula II, $R'_1$ is a $C_1$-$C_2$ alkyl group, $R'_2$ is a straight or branched chain $C_2$-$C_{12}$ alkylene group, and $R''_3$ and $R'''_3$ are $C_1$-$C_4$ alkyl groups, the total number of carbon atoms contained in the radicals $R'_2$, $R''_3$ and $R'''_3$ having to be greater than or equal to 10.

6. Dispersions according to claim 5 characterised in that the non-hydrolysable unsaturated tertiary nitrogen compound is diterbutylaminoethylmethacrylate, diterbutylaminopropylmethacrylate or dipentylaminoethylmethacrylate.

7. Dispersions according to any one of the preceding claims characterised in that the non-ionogenic monomer or monomers copolymerisable with the non-hydrolysable unsatutated tertiary nitrogen compound are vinylaromatic compounds, vinyl esters, ethylenic nitriles, ethylenic carboxylic esters, dialkyl esters of ethylenic carboxylic diacids or ethylenic amides and their N-substituted derivatives.

8. Dispersions according to any one of the preceding claims characterised in that the cationic charge-generating substance comprises a radical-generating polymerisation initiator having a cationic terminal residue in addition to the copolymerisable unsaturated salt of polyco-ordinated onium of an element of groups VB and VTB.

9. Dispersions according to claim 8 characterised in that the cationic charge-generator substance is an unsaturated quaternary ammonium salt of the following formula :

$$CH_2 = \overset{\overset{R_4}{|}}{C} - \overset{\overset{O}{\|}}{C} - A - R_5 - {}^{+}N - \underset{\underset{R''_6}{|}}{\overset{\overset{R6}{|}}{R'_6}},\quad X^-$$

in which :

- $X^-$ is selected from the following anions : $Cl^-$, $Br^-$, $I^-$, $SO_4H^-$, $SO_4^{--}$, $CH_3SO_4^-$, $C_2H_5SO_4^-$, $CH_3COO^-$,
- $R_4$ represents a hydrogen atom or a methyl group,
- A represents an oxygen atom or an –NH– group,
- $R_5$ represents a straight or branched chain alkylene group containing from 1 to 18 carbon atoms,
- $R_6$, $R'_6$, $R''_6$ are similar or different and represent an alkyl group containing from 1 to 4 carbon atoms, optionally substituted by a hydroxy radical, or a phenyl group optionally substituted by an alkyl radical containing from 1 to 9 carbon atoms,
- the total number of carbon atoms in the group $R_5$, $R_6$, $R'_6$ and $R''_6$ is higher than 4 when A represents oxygen.

10. Dispersions according to claim 9 characterised in that the unsaturated quaternary ammonium salt is trimethylaminoethylacrylamide chloride, trimethylaminopropylacrylamide or methacrylamide bromide, trimethylaminobutylacrylamide or methacrylamide methyl sulphate or trimethylaminopropylmethacrylate chloride.

11. Dispersions according to claim 8 characterised in that the cationic charge-generating substance is an unsaturated salt of pyridinium, quinolinium, imidazolium or benzimidazolium.

12. Dispersions according to any one of the preceding claims characterised in that the use of the substance for generating cationic charges, in the reaction medium (A), is prior to that of the non-hydrolysable unsaturated tertiary nitrogen compound or concurrent with that of said unsaturated nitrogen compound.

13. Dispersions according to any one of the preceding claims characterised in that said cationic charge-generating substance is present in the reaction medium (A) at the beginning of the polymerisation operation by means of a 'cationic seed'.

14. Dispersions according to any one of the preceding claims characterised by using, for 100 parts by weight of non-ionogenic monomer or monomers :

- from 1 to 20 parts by weight of cationic charge-generating substance, and
- at least four parts by weight in total of cationic charge-generating substance and unsaturated nitrogen compound.

15. Dispersions according to claim 14 characterised by using, for 100 parts by weight of non-ionogenic monomer or monomers :

- from 2 to 10 parts by weight of cationic charge-generating substance ; and
- from 4 to 15 parts by weight in total of cationic charge-generating substance and unsaturated nitrogen compound.

16. Dispersions according to any one of the preceding claims characterised in that the polymerisation operation is carried out at a temperature of between 60 and 90°C at any pH-value in the presence of a cationic or non-ionic initiator and possibly a cationic or non-ionic emulsifying agent.

17. Use of the cationic aqueous dispersions of synthetic polymers according to any one of the preceding claims, as binding agents.

**Claims for the Contracting State AT**

1. A process for the preparation of cationic aqueous dispersions of synthetic polymers characterised by bringing together at least one unsaturated tertiary nitrogen compound which is non-hydrolysable in an acid or alkaline medium represented by :

a) N(ωdialkylaminoalkyl)amides of unsaturated carboxylic acids of formula I :

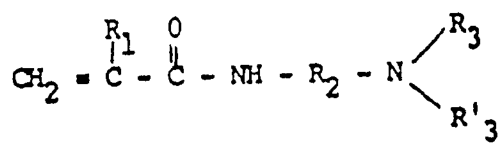

in which :

- $R_1$ represents a hydrogen atom or a $C_1$-$C_4$ alkyl group,
- $R_2$ represents a $C_1$-$C_{12}$ alkylene group ; $R_3$ and $R'_3$ represent $C_1$-$C_8$ alkyl groups and phenyl groups which are optionally substituted by a $C_1$-$C_9$ alkyl radical ;

b) unsaturated amino esters of formula II :

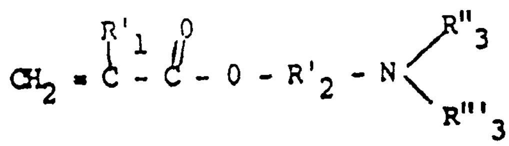

in which :

- $R'_1$ represents a $C_1$-$C_5$ alkyl group,
- $R'_2$represents a straight or branched chain alkylene group containing at least two carbon atoms, and
- $R''_3$ and $R'''_3$ are identical or different and represent a $C_1$-$C_6$ alkyl group optionally substituted by a hydroxy radical, or a phenyl group optionally substituted by a $C_1$-$C_9$ alkyl radical,

the total number of carbon atoms contained in the radicals $R'_2$, $R''_3$ and $R'''_3$ having to be greater than 8 ;

c) the heterocyclic nitrogen compounds containing a nitrogen atom or a carbon atom substituted by a vinyl group ;

and the reaction medium (A) of an operation for polymerisation in aqueous emulsion of at least one non-ionogenic monomer copolymerisable with said non-hydrolysable unsaturated tertiary nitrogen compound, said reaction medium (A) containing essentially cationic charges provided by at least one substance for generating cationic charges which can be chemically bonded to said synthetic polymers and formed by a copolymerisable unsaturated salt of polyco-ordinated onion of an element of groups VB and VIB.

2. A process according to claim 1 characterised in that said non-hydrolysable unsaturated tertiary nitrogen compound is brought together with the reaction medium (A) at any stage in the operation for polymerisation of the non-ionogenic monomer or monomers copolymerisable with the non-hydrolysable unsaturated tertiary nitrogen compound.

3. A process according to claim 1 or claim 2 characterised in that in formula I $R_1$ represents a $C_1$-$C_2$ alkyl group, $R_2$ represents a $C_1$-$C_8$ alkylene group and $R_3$ and $R'_3$ represent $C_1$-$C_4$ alkyl groups.

4. A process according to claim 3 characterised in that the non-hydrolysable unsaturated tertiary nitrogen compound is dimethylaminomethylacrylamide or methacrylamide, or dimethylaminoethylacrylamide or methacrylamide.

5. A process according to claim 1 or claim 2 characterised in that in formua II $R'_1$ is a $C_1$-$C_2$ alkyl group, $R'_2$ is a straight or branched chain, $C_2$-$C_{12}$ alkylene group, and $R''_3$ and $R'''_3$ are $C_1$-$C_4$ alkyl groups, the total number of carbon atoms contained in the radicals $R'_2$, $R''_3$ and $R'''_3$ having to be greater than or equal to 10.

6. A process according to claim 5 characterised in that the non-hydrolysable unsaturated tertiary nitrogen coupound is diterbutylaminoethylmethacrylate, diterbutylaminopropylmethacrylate or dipentylaminoethylmethacrylate.

7. A process according to any one of the preceding claims characterised in that the non-ionogenic monomer or monomers copolymerisable with the non-hydrolysable unsaturated tertiary nitrogen compound are vinylaromatic compounds, vinyl esters, ethylenic nitriles, ethylenic carboxylic esters, dialkyl esters of ethylenic carboxylic diacids or ethylenic amides and their N-substituted derivatives.

8. A process according to any one of the preceding claims characterised in that the cationic charge-generating substance is formed by a radical-generating polymerisation initiator having a cationic terminal residue and a copolymerisable unsaturated salt of polyco-ordinated onium of an element of groups VB and VIB.

9. A process according to claim 8 characterised in that the cationic charge-generating substance is an unsaturated quaternary ammonium salt of the following formula :

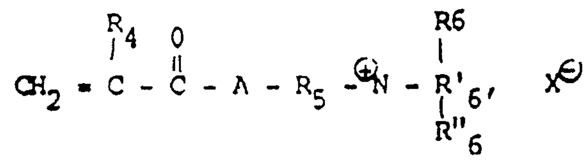

in which :

- $X^-$ is selected from the following anions : $Cl^-$, $Br^-$, $I^-$, $SO_4H^-$, $SO_4^{--}$, $CH_3SO_4^-$, $C_2H_5SO_4^-$, $CH_3COO^-$,
- $R_4$ represents a hydrogen atom or a methyl group,
- A represents an oxygen atom or an –NH– group,
- $R_5$ represents a straight or branched chain alkylene group containing from 1 to 18 carbon atoms,
- $R_6$, $R'_6$, $R''_6$ are similar or different and represent an alkyl group containing from 1 to 4 carbon atoms, optionally substituted by a hydroxy radical, or a phenyl group optionally substituted by an alkyl radical containing from 1 to 9 carbon atoms,
- the total number of carbon atoms in the groups $R_5$, $R_6$, $R'_6$ and $R''_6$ is higher than 4 when A represents oxygen.

10. A process according to claim 9 characterised in that the unsaturated quaternary ammonium salt is trimethylaminoethylcrylamide chloride, trimethylaminopropylacrylamide or methacrylamide bromide, trimethylaminobutylacrylamide or methacrylamide methyl sulphate or trimethylaminopropylmethacrylate chloride.

11. A process according to claim 8 characterised in that the cationic charge-generating substance is an unsaturated salt of pyridinium, quinolinium, imidazolium or benzimidazolium.

12. A process according to any one of the preceding claims characterised in that the use of the substance for generating cationic charges, in the reaction medium (A), is prior to that of the non-hydrolysable unsaturated tertiary nitrogen compound or concurrent with that of said unsaturated nitrogen compound.

13. A process according to any one of the preceding claims characterised in that said cationic charge-generating substance is present in the reaction medium (A) at the beginning of the polymerisation operation by means of a 'cationic seed'.

14. A process according to any one of the preceding claims characterised by using, for 100 parts by weight of non-ionogenic monomer or monomers :

- from 1 to 20 parts by weight of cationic charge-generating substance, and
- at least four parts by weight in total of cationic charge-generating substance and unsaturated nitrogen compound.

15. A process according to claim 14 characterised by using, for 100 parts by weight of non-ionogenic monomer or monomers :

- from 2 to 10 parts by weight of cationic charge-generating substance ; and
- from 4 to 15 parts by weight in total of cationic charge-generating substance and unsaturated nitrogen compound.

16. A process according to any one of the preceding claims characterised in that the polymerisation operation is carried out at a temperature of between 60 and 90°C at any pH-value in the presence of a cationic or non-ionic initiator and possibly a cationic or non-ionic emulsifying agent.

17. Use of the cationic aqueous dispersions of synthetic polymers produced by the process according to

any one of the preceding claims, as binding agents.

## Ansprüche

### Patentanprüche für die bennanten vertragsstaat : BE, CH, DE, FR, GB, IT, LI, LU, NL, SE

1. Wässrige kationische Dispersionen von synthetischen Polymeren, dadurch gekennzeichnet, daß sie erhältlich sind durch Umsetzen mindestens einer tertiären stickstoffhaltigen ungesättigten Verbindung, die in saurem und alkalischem Milieu nicht hydrolysierbar ist, und die entweder :

a) ein N(ω-dialkylaminoalkyl)amid einer ungesättigten Carbonsäure der Formel I

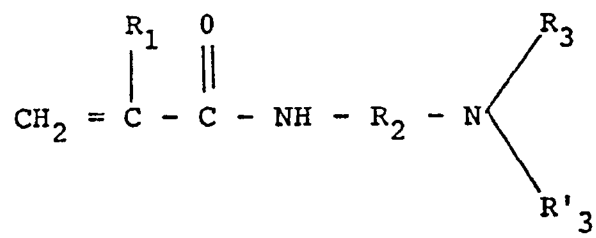

wobei :

– $R_1$ ein Wasserstoffatom oder eine Alkylgruppe mit 1 bis 4 C-Atomen ist

– $R_2$ eine Alkylengruppe mit 1 bis 12 C-Atomen ist ; $R_3$ und $R'_3$ Alkylgruppen mit 1 bis 6 C-Atomen sind, oder Phenylgruppen, die substituiert sein können durch einen Alkylrest mit 1 bis 9 C-Atomen ;

b) ein ungesättigter Aminoester mit der Formel II

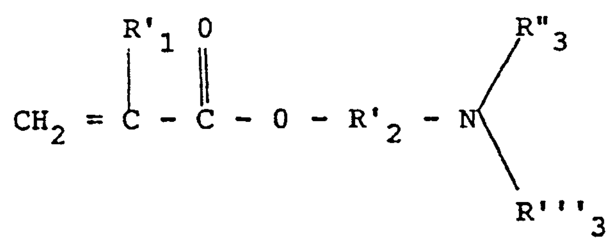

wobei :

– $R'_1$ eine Alkylgruppe mit 1 bis 5 C-Atomen ist,

– $R'_2$ eine Alkylengruppe, die linear oder verzweigt ist, mit mindestens 2 C-Atomen

– $R''_3$ und $R'''_3$ gleiche oder unterschiedliche Alkylgruppen mit 1 bis 6 C-Atomen sind, die substituiert sein können durch eine Hydroxygruppe, oder Phenylgruppen sind, die substituiert sein können durch eine Alkylgruppe mit 1 bis 9 C-Atomen,

wobei die Gesamtzahl der C-Atome in den Resten $R'_2$, $R''_3$ und $R'''_3$ größer ist als 8 ;

c) oder eine heterocyclische stickstoffhaltige Verbindung ist, die entweder am Stickstoff oder am Kohlenstoff durch eine Vinylgruppe substituiert ist ;

mit dem Reaktionsmedium (A) eines Polymerisationsvorgangs mindestens einer monomeren nicht ionogen Verbindung in wässriger Emulsion, die mit genannter stickstoffhaltiger tertiärer ungesättigter nicht hydrolysierbarer Verbindung copolymerisierbar ist, wobei das Reaktionsmedium (A) im wesentlichen kationische Ladungsträger enthält, die von mindestens einer Erzeugersubstanz für kationische Ladungsträger geliefert werden, die chemisch verknüpfbar ist mit genannten synthetischen Polymeren, und die aus einem copolymerisierbaren ungesättigten Oniumsalz mit einem polycoordinierten Element der Gruppen VB und VIB besteht.

2. Dispersionen nach Anspruch 1, dadurch gekennzeichnet, daß die genannte tertiäre ungesättigte stickstoffhaltige und nicht hydrolysierbare Verbindung dem Reaktionsmedium (A) zugegeben wird in irgendeinem Stadium des Polymerisationsvorgangs des oder der nicht ionogenen Monomeren, die mit genannter tertiärer stickstoffhaltiger ungesättigter nicht hydrolysierbarer Verbindung copolymerisierbar sind.

3. Dispersionen nach den Ansprüchen 1 oder 2, dadurch gekennzeichnet, daß in der Formel I $R_1$ eine Alkylgruppe mit 1 bis 2 C-Atomen, $R_2$ eine Alkylengruppe mit 1 bis 8 C-Atomen und $R_3$ und $R'_3$ Alkylgruppen mit 1 bis 4 C-Atomen darstellen.

4. Dispersionen nach Anspruch 3, dadurch gekennzeichnet, daß die tertiäre ungesättigte und nicht hydrolysierbare stickstoffhaltige Verbindung Dimethylaminomethylacrylamid oder -methacrylamid oder Dimethylaminoethylacrylamid oder -methacrylamid ist.

5. Dispersionen nach den Ansprüchen 1 oder 2, dadurch gekennzeichnet, daß in der Formel II $R'_1$ eine Alkylgruppe mit 1 bis 2 C-Atomen, $R'_2$ eine lineare oder verzweigte Alkylengruppe mit 2 bis 12 C-Atomen, $R''_3$ und $R'''_3$ Alkylgruppen mit 1 bis 4 C-Atomen sind und die gesamte Anzahl der in den Resten $R'_2$, $R''_3$ und $R'''_3$ enthaltenen C-Atome größer oder gleich 10 ist.

6. Dispersionen nach Anspruch 5, dadurch gekennzeichnet, daß die tertiäre ungesättigte und nicht hydrolysierbare stickstoffhaltige Verbindung Ditertiärbutylaminoethylmethacrylat, Ditertiärbutylaminopropylmethacrylat oder Dipentylaminoethylmethacrylat ist.

7. Dispersionen nach einem der vorhergehenden Ansprüche, dadurch gekennzeichnet, daß das oder die nicht ionogene(n) Monomere(n), das oder die mit der ungesättigten nicht hydrolysierbaren tertiären stickstoffhaltigen Verbindung copolymerisierbar ist oder sind, Vinylaromaten, Vinylester, ethylenische Nitrile, Ester von ethylenischen Carbonsäuren, Dialkylester von ethylenischen Dicarbonsäuren, oder ethylenische Amide oder deren stickstoffsubstituierte Derivate sind.

8. Dispersionen nach einem der vorhergehenden Ansprüche, dadurch gekennzeichnet, daß die Substanz zur Erzeugung kationischer Ladungsträger einen radikalischen Polymerisationsstarter mit einem kationischen Ende zusätzlich zu dem ungesättigten copolymerisierbaren Oniumsalz mit einem polycoordinierten ELEMENT DER Gruppen VB und VIB enthält.

9. Dispersionen nach Anspruch 8, dadurch gekennzeichnet, daß die Substanz zur Erzeugung kationischer Ladungsträger ein ungesättigtes quaternäres Ammoniumsalz mit folgender Formel ist :

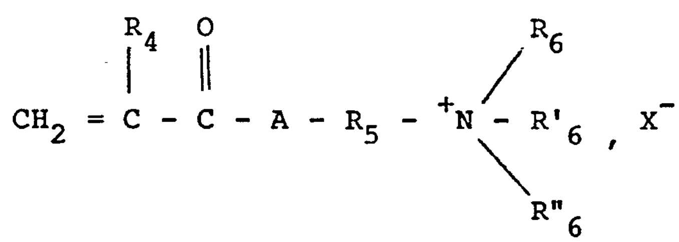

wobei :

– $X^-$ eines der folgenden Anionen ist : $Cl^-$, $Br^-$, $I^-$, $SO_4H^-$, $SO_4^{--}$, $CH_3SO_4^-$, $C_2H_5SO_4^-$, $CH_3COO^-$,
– $R_4$ ein Wasserstoffatom oder eine Methylgruppe ist
– A ein Sauerstoffatom oder eine NH-Gruppe ist
– $R_5$ eine lineare oder verzweigte Alkylengruppe ist mit 1 bis 18 C-Atomen ;
– $R_6$, $R'_6$, $R''_6$ gleiche oder unterschiedliche Alkylgruppen mit 1 bis 4 C-Atomen sind, die eventuell durch eine Hydroxygruppe substituiert sind oder Phenylgruppen, die eventuell durch eine Alkylgruppe mit 1 bis 9 C-Atomen substituiert sind ;
– wobei die gesamte Anzahl der C-Atome, die enthalten sind in den Resten $R_5$, $R_6$, $R'_6$ und $R''_6$ größer ist als 4, wenn A ein Sauerstoffatom ist.

10. Dispersionen nach Anspruch 9, dadurch gekennzeichnet, daß das ungesättigte quaternäre Ammoniumsalz das Chlorid des Trimethylaminoethylacrylamids, das Bromid des Trimethylaminopropylacrylamids oder -methacrylamids, das Methylsulfat des Trimethylaminobutylacrylamids oder -methacrylamids oder das Chlorid des Trimethylaminopropylmethacrylats ist.

11. Dispersionen nach Anspruch 8, dadurch gekennzeichnet, daß die Substanz zur Erzeugung kationischer Ladungsträger ein ungesättigtes Pyridinium-, Chinolinium-, Imidazolium- oder Benzimidazoliumsalz ist.

12. Dispersionen nach einem der vorhergehenden Ansprüche, dadurch gekennzeichnet, daß die Zugabe der die kationischen Ladungsträger erzeugenden Substanz zum Reaktionsmedium derjenigen der tertiären ungesättigten nicht hydrolysierbaren Stickstoffverbindung vorhergeht oder gleichzeitig erfolgt.

13. Dispersionen nach einem der vorhergehenden Ansprüche, dadurch gekennzeichnet, daß die kationische Ladungsträger erzeugende Substanz im Reaktionsmedium (A) zu Beginn des Polymerisationsvorgangs mittels einer "kationischen Saat" anwesend ist.

14. Dispersionen nach einem der vorhergehenden Ansprüche, dadurch gekennzeichnet, daß man für 100 Gewichtsteile des oder der nicht ionogenen Monomeren 1 bis 20 Gewichtsteile der kationische Ladungsträger erzeugenden Substanz, und mindestens 4 Gewichtsteile von kationische Ladungsträger erzeugender Substanz und ungesättigter stickstoffhaltiger Verbindung zusammen, zugibt.

15. Dispersionen nach Anspruch 14, dadurch gekennzeichnet, daß man zu 100 Gewichtsteilen des oder der nicht ionogenen Monomeren 2 bis 10 Gewichtsteile der kationische Ladungsträger erzeugenden Substanz, und 4 bis 15 Gewichtsteile von kationische. Ladungsträger erzeugender Substanz und ungesättigter stickstoffhaltiger Verbindung zusammen, zugibt.

16. Dispersionen nach einem der vorhergehenden Ansprüche, dadurch gekennzeichnet, daß der Polymerisationsvorgang bei einer Temperatur von 60° bis 90°C, bei beliebigem pH, in Gegenwart eines kationischen oder nicht ionischen Starters und eventuell eines kationischen oder nicht ionischen emulsierenden Agens durchgeführt wird.

17. Verwendung der wässrigen kationischen Dispersionen von synthetischen Polymeren, die Gegenstand eines der vorgehenden Ansprüche sind, als Bindemittel.

**Patentansprüche für den benannten vertragsstaat : AT**

1. Verfahren zur Herstellung wässriger kationischer Dispersionen von synthetischen Polymeren, dadurch gekennzeichnet, daß man mindestens eine tertiäre stickstoffhaltige ungesättigte Verbindung, die im sauren und im alkalischen Milieu nicht hydrolysierbar ist, die entweder :

a) ein N(ω-dialkylaminoalkyl)amid einer ungesättigten Carbonsäure der Formel I

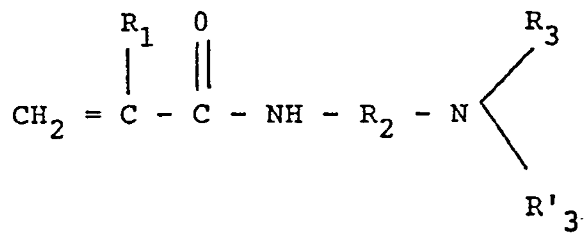

wobei :

– $R_1$ ein Wasserstoffatom oder eine Alkylgruppe mit 1 bis 4 C-Atomen ist

– $R_2$ eine Alkylengruppe mit 1 bis 12 C-Atomen ist ; $R_3$ und $R'_3$ Alkylgruppen mit 1 bis 6 C-Atomen sind, oder Phenylgruppen, die substituiert sein können durch einen Alkylrest mit 1 bis 9 C-Atomen ;

b) ein ungesättigter Aminoester mit der Formel II

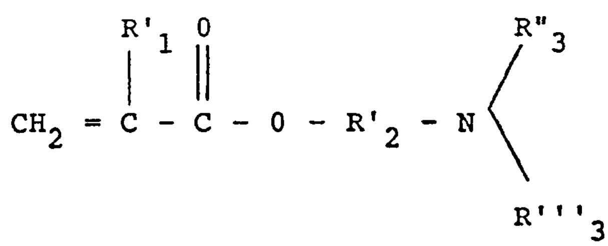

wobei :

– $R'_1$ eine Alkylgruppe mit 1 bis 5 C-Atomen ist,

– $R'_2$ eine Alkylengruppe, die linear oder verzweigt ist, mit mindestens 2 C-Atomen

– $R''_3$ und $R'''_3$ gleiche oder unterschiedliche Alkylgruppen mit 1 bis 6 C-Atomen sind, die substituiert sein können durch eine Hydroxygruppe, oder Phenylgruppen sind, die substituiert sein können durch eine Alkylgruppe mit 1 bis 9 C-Atomen, wobei die Gesamtzahl der C-Atome in den Resten $R'_2$, $R''_3$ und $R'''_3$ größer ist als 8 ;

c) oder eine heterocyclische stickstoffhaltige Verbindung ist, die entweder am Stickstoff oder am Kohlenstoff durch eine Vinylgruppe substituiert ist ;

zum Reaktionsmedium (A) eines Polymerisationsvorgangs mindestens einer monomeren nicht ionogen Verbindung in wässriger Emulsion gibt, die mit genannter stickstoffhaltiger tertiärer ungesättigter nicht hydrolysierbarer Verbindung copolymerisierbar ist, wobei das Reaktionsmedium (A) im wesentlichen kationische Ladungsträger enthält, die von mindestens einer Erzeugersubstanz für kationische Ladungsträger geliefert werden, die chemisch verknüpfbar ist mit genannten synthetischen Polymeren, und die aus einem copolymerisierbaren ungesättigten Oniumsalz mit einem polycoordinierten Element der Gruppen VB und VIB besteht.

2. Verfahren nach Anspruch 1, dadurch gekennzeichnet, daß die genannte tertiäre ungesättigte stickstoffhaltige und nicht hydrolysierbare Verbindung dem Reaktionsmedium (A) zugegeben wird in irgendeinem Stadium des Polymerisationsvorgangs des oder der nicht ionogenen Monomeren, die mit genannter tertiärer stickstoffhaltiger ungesättigter nicht hydrolysierbarer Verbindung copolymerisierbar sind.

3. Verfahren nach den Ansprüchen 1 oder 2, dadurch gekennzeichnet, daß in der Formel I $R_1$ eine Alkylgruppe mit 1 bis 2 C-Atomen, $R_2$ eine Alkylengruppe mit 1 bis 8 C-Atomen und $R_3$ und $R'_3$ Alkylgruppen mit 1 bis 4 C-Atomen darstellen.

4. Verfahren nach Anspruch 3, dadurch gekennzeichnet, daß die tertiäre ungesättigte und nicht hydrolysierbare stickstoffhaltige Verbindung Dimethylaminomethylacrylamid oder -methacrylamid oder Dimethylaminoethylacrylamid oder -methacrylamid ist.

5. Verfahren nach den Ansprüchen 1 oder 2, dadurch gekennzeichnet, daß in der Formel II $R'_1$ eine Alkylgruppe mit 1 bis 2 C-Atomen, $R'_2$ eine lineare oder verzweigte Alkylengruppe mit 2 bis 12 C-Atomen, $R''_3$ und $R'''_3$ Alkylgruppen mit 1 bis 4 C-Atomen sind und die gesamte Anzahl der in den Resten $R'_2$, $R''_3$ und $R'''_3$ enthaltenen C-Atome größer oder gleich 10 ist.

6. Verfahren nach Anspruch 5, dadurch gekennzeichnet, daß die tertiäre ungesättigte und nicht hydrolysierbare stickstoffhaltige Verbindung Ditertiärbutylaminoethylmethacrylat, Ditertiärbutylaminopropylmethacrylat oder Dipentylaminoethylmethacrylat ist.

7. Verfahren nach einem der vorhergehenden Ansprüche, dadurch gekennzeichnet, daß das oder die nicht ionogene(n) Monomere(n), das oder die mit der ungesättigten nicht hydrolysierbaren tertiären stickstoffhaltigen Verbindung copolymerisierbar ist oder sind, Vinylaromaten, Vinylester, ethylenische Nitrile, Ester von ethylenischen Carbonsäuren, Dialkylester von ethylenischen Dicarbonsäuren, oder ethylenische Amide oder deren stickstoffsubstituierte Derivate sind.

8. Verfahren nach einem der vorhergehenden Ansprüche, dadurch gekennzeichnet, daß die Substanz zur Erzeugung kationischer Ladungsträger aus einem radikalischen Polymerisationsstarter mit einem kationischen Ende und einem ungesättigten copolymerisierbaren Oniumsalz mit einem polycoordiniertien Element der Gruppen VB und VIB besteht.

9. Verfahren nach Anspruch 8, dadurch gekennzeichnet, daß die Substanz zur Erzeugung kationischer Ladungsträger ein ungesättigtes quaternäres Ammoniumsalz mit folgender Formel ist :

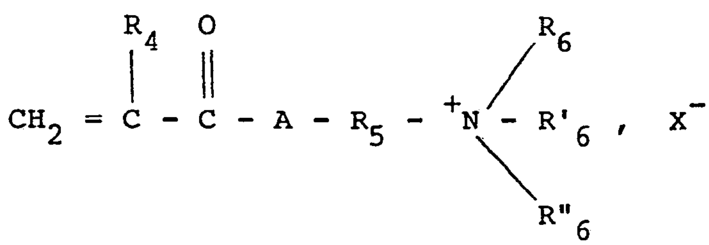

wobei :

- $X^-$ eines der folgenden Anionen ist : $Cl^-$, $Br^-$, $I^-$, $SO_4H^-$, $SO_4^{--}$, $CH_3SO_4^-$, $C_2H_5SO_4^-$ , $CH_3COO^-$,
- $R_4$ ein Wasserstoffatom oder eine Methylruppe ist
- A eine Sauerstoffatom oder eine NH-Gruppe ist
- $R_5$ eine lineare oder verzweigte Alkylengruppe ist mit 1 bis 18 C-Atomen ;
- $R_6$, $R'_6$, $R''_6$ gleiche oder unterschiedliche Alkylgruppen mit 1 bis 4 C-Atomen sind, die eventuell durch eine Hydroxygruppe substituiert sind oder Phenylgruppen, die eventuell durch eine Alkylgruppe mit 1 bis 9 C-Atomen substituiert sind ;
- wobei die gesamte Anzahl der C-Atome, die enthalten sind in den Resten $R_5$, $R_6$, $R'_6$ und $R''_6$ größer ist als 4, wenn A ein Sauerstoffatom ist.

10. Verfahren nach Anspruch 9, dadurch gekennzeichnet, daß das ungesättigte quaternäre Ammoniumsalz das Chlorid des Trimethylaminoethylacrylamids, das Bromid des Trimethylaminopropylacrylamids oder -methacrylamids, das Methylsulfat des Trimethylaminobutylacrylamids oder -methacrylamids oder das Chlorid des Trimethylaminopropylmethacrylats ist.

11. Verfahren nach Anspruch 8, dadurch gekennzeichnet, daß die Substanz zur Erzeugung kationischer Ladungsträger ein ungesättigtes Pyridinium-, Chinolinium-, Imidazolium- oder Benzimidazoliumsalz ist.

12. Verfahren nach einem der vorhergehenden Ansprüche, dadurch gekennzeichnet, daß die Zugabe der die kationischen Ladungsträger erzeugenden Substanz zum Reaktionsmedium derjenigen der tertiären ungesättigten nicht hydrolysierbaren Stickstoffverbindung vorhergeht oder gleichzeitig erfolgt.

13. Verfahren nach einem der vorhergehenden Ansprüche, dadurch gekennzeichnet, daß die kationische Ladungsträger erzeugende Substanz im Reaktionsmedium (A) zu Beginn des Polymerisationsvorgangs mittels eine "kationischen Saat" anwesend ist.

14. Verfahren nach einem der vorhergehenden Ansprüche, dadurch gekennzeichnet, daß man für 100 Gewichtsteile des oder der nicht ionogenen Monomeren 1 bis 20 Gewichtsteile der kationische Ladungsträger erzeugenden Substanz, und mindestens 4 Gewichtsteile von kationische Ladungsträger erzeugender Substanz und ungesättigter stickstoffhaltiger Verbindung zusammen, zugibt.

15. Verfahren nach Anspruch 14, dadurch gekennzeichnet, daß man zu 100 Gewichtsteilen des oder der nicht ionogenen Monomeren 2 bis 10 Gewichtsteile der kationische Ladungsträger erzeugenden Substanz, und 4 bis 15 Gewichtsteile von kationische Ladungsträger erzeugender Substanz und ungesättigter stickstoffhaltiger Verbindung zusammen, zugibt.

16. Verfahren nach einem der vorhergehenden Ansprüche, dadurch gekennzeichnet, daß der Polymerisationsvorgang bei einer Temperatur von 60° bis 90°C, bei beliebigem pH, in Gegenwart eines kationischen oder nicht ionischen Stärters und eventuell eines kationischen oder nicht ionischen emulsierenden Agens durchgeführt wird.

17. Verwendung der wässrigen kationischen Dispersionen von synthetischen Polymeren, die nach dem Verfahren gemäß einem der vorhergehenden Ansprüche erhalten werden, als Bindemittel.